# EUROPEAN PATENT APPLICATION

(11) **EP 4 729 580 A1**
(43) Date of publication of application: **22.04.2026**
(21) Application number: 25209304.2
(22) Date of filing: 16.10.2025
(51) Int. Cl.: C08L 95/00

(54) **ASPHALT EMULSION AND PAVING MATERIAL**

(30) Priority: 18.10.2024 US 202463708871 P
(71) Applicant: Nouryon Chemicals International B.V., 1101 BZ Amsterdam (NL)
(72) Inventor: TERNERO DALESSI, Ester, 1101 BZ Amsterdam (NL)
(74) Representative: Ingrassia, Fisher & Lorenz UK Ltd.

(57) **Abstract**

An asphalt emulsion include a water phase and an oil phase. The water phase includes a latex polymer, an emulsifier, and an additive. The latex polymer includes styrene butadiene. The emulsifier includes an alkyl diamine and a fatty acid amine condensate that is the reaction product of a C16-C20 fatty acid and an polyamine. The additive includes a C10-C20 alcohol that is alkoxylated with from about 15 to about 75 moles of ethylene oxide and a C8-C24 alkylamine that is alkoxylated with from about 5 to about 25 moles of ethylene oxide. The oil phase includes asphalt.

## Description

### CROSS-REFERENCE TO RELATED APPLICATIONS

This application claims the benefit of U.S. Provisional Application No. 63/708,871 filed on October 18, 2024, which is hereby expressly incorporated herein by reference in its entirety.

### TECHNICAL FIELD

The present disclosure generally relates to an asphalt emulsion and a paving material. More specifically, this disclosure relates to an asphalt emulsion including a particular additive that includes an alkoxylated alcohol and an alkoxylated amine.

### BACKGROUND

Asphalt, also known as bitumen, is a widely utilized petroleum based component in constructing and maintaining roads. This material is blended with various aggregates to create a paving material that is applied to substrates such as roads.

Asphalt emulsions are typically employed in the above process and typically include a combination of asphalt (bitumen), water, and an emulsifying agent. Asphalt emulsions can be stable and can be stored and transported, and over time, asphalt particles may begin to settle or separate from a water phase which is a common phenomenon. Periodic agitation or mixing is usually done to maintain emulsion stability during storage. They can be used in a variety of applications, including road surface treatments, pavement sealing, tack coats, cold mix asphalt, soil stabilization, dust control, and as a sealant for pavements. The use of water in emulsions reduces the need for volatile organic compounds (VOCs) found in traditional asphalt hot mix products.

Anionic asphalt emulsions have a negative charge and are commonly used in road construction and maintenance for applications asphalt mixtures and seal coats. These type of emulsions perform well in conditions where the aggregate has a positive surface charge, which improves adhesion with the negative charge of anionic asphalt emulsion. Cationic asphalt emulsions carry a positive charge and tend to be used in applications that require quick setting times and better adhesion to negatively charged aggregate surfaces.

Latex polymers in general, such as styrene-butadiene polymer dispersed in water, add flexibility and elasticity to asphalt emulsions, ultimately reducing cracking of the paving material and enhancing an ability of the paving material to withstand temperature changes and heavy traffic loads. latex polymers also improve the weather resistance of the paving material by making it less susceptible to oxidation and UV degradation. latex polymer modified paving materials also tend to exhibit better resistance to water and moisture penetration, minimizing common issues like potholes or cracks caused by water damage.

In asphalt emulsions, the latex polymers help stabilize particles of the asphalt by providing a uniform film over the surface of the emulsion. This film formation improves the overall performance and workability of the emulsion. When the emulsion is applied and the water evaporates, the latex polymers help form a cohesive, durable film that binds the particles of the asphalt together, leading to a smoother and more resilient final product. This can be useful for the longevity of the road surface, reducing the likelihood of raveling when aggregate particles dislodge from the surface. latex polymers also tend to modify asphalt sensitivity to temperature, allowing for better performance across a wider range of temperatures. These polymers make asphalt less prone to becoming brittle in cold weather and too soft in hot conditions.

In anionic emulsions, non-ionic latex polymers help enhance film strength and flexibility, even though many typical surfactants and asphalt particles are negatively charged. In cationic emulsions, non-ionic latex polymers perform the same role without interfering with the positively charged surfactants. This versatility allows road engineers to modify formulations as needed based on specific project requirements or local conditions, without changing the non-ionic latex polymers.

However, there are drawbacks to using latex polymers in asphalt emulsions. In some cases, the latex polymers may not blend well with the other components of the asphalt emulsions, e.g. by disrupting the surfactants thereby leading to separation or instability in the asphalt emulsion. This can lead to settling or coagulation (e.g. clumping of the asphalt and latex polymer particles), which impacts application quality and may reduce performance benefits.

In addition, if asphalt emulsions that include latex polymers do not coalesce properly or if environmental conditions such as humidity, temperature, or curing time are not well controlled, uniform film formation may not occur. This can reduce the adhesion, elasticity, and crack resistance of the asphalt.

Latex polymer modified asphalt emulsions may also require a longer curing time in cooler or more humid conditions, before achieving full strength and adhesion. This can delay construction schedules or affect the overall quality if the asphalt is subjected to traffic before it fully cures.

In addition, additional handling may be required to properly mix latex polymers in asphalt emulsions. This can lead to higher operational costs, including storage and transportation.

These types of emulsions are also sensitive to environmental conditions, particularly temperature and humidity. In hot, dry conditions, latex polymer modified asphalt emulsions may experience rapid water loss, leading to premature setting and poor film formation. Conversely, in cold or humid conditions, water may take longer to evaporate, delaying curing times and increasing the risk of improper film development. Moreover, these types of emulsions are typically water-based, making them vulnerable to freezing in cold conditions. If the emulsion freezes before application, it may lose its effectiveness, leading to stability issues or phase separation. In some cases, the latex may hinder adhesion between the asphalt and aggregate. The result could be poor aggregate retention, leading to surface deterioration or raveling over time.

In view of the above, there remains an opportunity to develop additional solutions to mitigate or eliminate the aforementioned potential problems and boost performance of asphalt emulsions. Furthermore, other desirable features and characteristics of the present disclosure will become apparent from the subsequent detailed description of the disclosure and the appended claims.

### BRIEF SUMMARY

This disclosure provides an asphalt emulsion including a water phase and an oil phase. The water phase is present in an amount of from about 30 to about 50 weight percent based on a total weight of the asphalt emulsion. The water phase includes a latex polymer, an emulsifier, and an additive. The latex polymer includes styrene butadiene. The emulsifier includes an alkyl diamine present in an amount of from about 0.2 to about 2.5 weight percent actives based on a total weight of the emulsifier. The emulsifier also includes a fatty acid amine condensate that is the reaction product of a C16-C20 fatty acid and an polyamine and that is present in an amount of from about 0.2 to about 2.5 weight percent actives based on a total weight of the emulsifier. The additive is present in an amount of from about 0.05 to about 0.5 weight percent actives based on a total weight of the asphalt emulsion. The additive includes a C10-C20 alcohol that is alkoxylated with from about 15 to about 75 moles of ethylene oxide and from about 0 to about 60 moles of propylene oxide and is present in an amount of from about 10 to about 90 weight percent actives based on a total weight of the additive. The additive also includes a C8-C24 alkylamine that is alkoxylated with from about 5 to about 25 moles of ethylene oxide and from about 0 to about 25 moles of propylene oxide and is present in an amount of from about 10 to about 90 weight percent actives based on a total weight of the additive. The oil phase is present in an amount of from about 50 to about 70 weight percent based on a total weight of the asphalt emulsion and includes asphalt.

### BRIEF DESCRIPTION OF THE DRAWINGS

The present disclosure will hereinafter be described in conjunction with the following Figures wherein:
FIG. 1A is a bar graph illustrating the results of the Mix Time and Cohesion testing as a Function of Composition with Limestone Aggregate of the Examples;
FIG. 1B is a bar graph illustrating the results of the Mix Time and Cohesion testing as a Function of Composition with Granite Aggregate of the Examples;
FIG. 2 is a bar graph illustrating the results of the Wet Track Abrasion and Loaded Wheel Test as a Function of Composition with Limestone Aggregate of the Examples; and
FIG. 3 is a bar graph illustrating the results of the SBR Abrasion Loss as a Function of Composition with Limestone Aggregate of the Examples.

### DETAILED DESCRIPTION

The following detailed description is merely exemplary in nature and is not intended to limit the current composition. Furthermore, there is no intention to be bound by any theory presented in the preceding background or the following detailed description.

Embodiments of the present disclosure are generally directed to polymers, compositions including the same, and methods for forming the same. For the sake of brevity, conventional techniques related to making polymers and such compositions may not be described in detail herein. Moreover, the various tasks and process steps described herein may be incorporated into a more comprehensive procedure or process having additional steps or functionality not described in detail herein. In particular, various steps in the manufacture of polymers and associated compositions are well-known and so, in the interest of brevity, many conventional steps will only be described briefly herein or will be omitted entirely without providing the well-known process details.

In this disclosure, the terminology "about" can describe values ± 0.1, 0.5, 1, 2, 3, 4, 5, 6, 7, 8, 9, or 10%, in various embodiments. Moreover, it is contemplated that, in various non-limiting embodiments, it is to be appreciated that all numerical values as provided herein, save for the actual examples, are approximate values with endpoints or particular values intended to be read as "about" or "approximately" the value as recited. It is also contemplated that all isomers and chiral options for each compound described herein are hereby expressly contemplated for use herein in various non-limiting embodiments.

Throughout this disclosure, the terminology percent "actives" is well recognized in the art and means the percent amount of active or actual compound or molecule present as compared to, for example, a total weight of a diluted solution of a solvent and such a compound. Some compounds, such as a solvent, are not described relative to a percent actives because it is well known to be approximately 100% actives. When the active or actual compound is a solid, the percent actives may be further described as percent solids. Any one or more of the values described herein may be alternatively described as percent actives and/or percent solids as would be understood by the skilled person.

In various embodiments, the terminology "free of" describes embodiments that include less than about 5, 4, 3, 2, 1, 0.5, or 0.1, weight percent (or weight percent actives) of the compound or element at issue using an appropriate weight basis as would be understood by one of skill in the art. In other embodiments, the terminology "free of" describes embodiments that have zero weight percent of the compound or element at issue.

The terminology "consists essentially of" may describe various non-limiting embodiments that are free of one or more optional compounds described herein and/or free of one or more polymers, surfactants, additives, solvents, etc.

It is to be understood that the subscripts of are typically described as average values because the synthesis of polymers typically produces a distribution of various individual molecules.

The polymers and compositions disclosed herein may suitably comprise, consist of, or consist essentially of the components, elements, and process delineations described herein. The embodiments illustratively disclosed herein suitably may be practiced in the absence of any element which is not specifically disclosed herein.

### Asphalt Emulsion

This disclosure provides an asphalt emulsion including a water phase and an oil phase. The water phase is present in an amount of from about 30 to about 50 weight percent based on a total weight of the asphalt emulsion. The water phase includes a latex polymer, an emulsifier, and an additive. The latex polymer includes styrene butadiene. The emulsifier includes an alkyl diamine present in an amount of from about 0.2 to about 2.5 weight percent actives based on a total weight of the emulsifier. The emulsifier also includes a fatty acid amine condensate that is the reaction product of a C16-C20 fatty acid and an polyamine and that is present in an amount of from about 0.2 to about 2.5 weight percent actives based on a total weight of the emulsifier. The additive is present in an amount of from about 0.05 to about 0.5 weight percent actives based on a total weight of the asphalt emulsion. The additive includes a C10-C20 alcohol that is alkoxylated with from about 15 to about 75 moles of ethylene oxide and from about 0 to about 60 moles of propylene oxide and is present in an amount of from about 10 to about 90 weight percent actives based on a total weight of the additive. The additive also includes a C8-C24 alkylamine that is alkoxylated with from about 5 to about 25 moles of ethylene oxide and from about 0 to about 25 moles of propylene oxide and is present in an amount of from about 10 to about 90 weight percent actives based on a total weight of the additive. The oil phase is present in an amount of from about 50 to about 70 weight percent based on a total weight of the asphalt emulsion and includes asphalt.

The asphalt emulsion itself may be described as either an oil-in-water (O/W) or water-in-oil (W/O) type. In an O/W asphalt emulsion, water acts as the continuous phase while the oil, or non-polar substance, is dispersed throughout it as droplets. In this scenario, the oil droplets are surrounded by water. Conversely, in a W/O asphalt emulsion, oil forms the continuous phase, with water dispersed as droplets within it. In this setup, water droplets are encased by oil. The water in the asphalt emulsion can either be the continuous or dispersed phase, wherein the "oil" or non-polar component, can be either the dispersed or continuous phase.

Beyond O/W and W/O types, the asphalt emulsion may also take the form of more complex systems, such as a water-in-oil-in-water (W/O/W) asphalt emulsion. This includes water droplets within oil droplets, which are then suspended in a continuous water phase. Another possibility is an oil-in-water-in-oil (O/W/O) asphalt emulsion, where oil droplets are encapsulated in water droplets, all within a continuous oil phase.

The asphalt emulsion may be alternatively described as an anionic asphalt emulsion, a cationic asphalt emulsion, or a non-ionic asphalt emulsion. Asphalt emulsions are commonly categorized by their setting and curing characteristics, which directly affect their performance and application. The four primary categories are rapid-setting, quick-setting, medium-setting, and slow-setting asphalt emulsions. The asphalt emulsion in this disclosure can fall into any of these categories.

Rapid-Setting (RS) asphalt emulsions quickly break when they come into contact with aggregate or air. The water within the asphalt emulsion evaporates fast, allowing the asphalt to bond with the aggregate quickly. This type of asphalt emulsion is ideal for rapid repairs and maintenance, where roads need to be reopened to traffic soon after application. RS asphalt emulsions are often used for thin applications like chip seal, setting within minutes to provide immediate strength, making them especially useful in warm, dry conditions. Humidity, however, can delay the setting process.

Quick-Setting (QS) asphalt emulsions break more slowly than RS emulsions but still set relatively quickly. These asphalt emulsions allow enough time for proper material spreading and compaction before they start to set, making them ideal for applications like slurry seals and micro-surfacing. QS asphalt emulsions typically break within a few minutes to a few hours, providing quick strength while still offering some flexibility for adjustment during application.

Medium-Setting (MS) asphalt emulsions offer a middle ground between fast and slow-setting asphalt emulsions, making them versatile for various projects. These asphalt emulsions are used in applications that require a moderate cure time, such as base stabilization and asphalt layers. MS asphalt emulsions break within a few minutes to hours, depending on environmental factors, allowing for additional compaction time while providing early strength. They are suitable for a wide range of environmental conditions, offering flexibility in scheduling and use.

Slow-Setting (SS) asphalt emulsions take the longest time to break and cure. These asphalt emulsions allow for extended workability and compaction time, making them ideal for applications requiring strong bonding and durability, such as road base stabilization and thicker surface layers. SS asphalt emulsions may take hours or even days to break, depending on the formulation and environmental conditions. Their slower curing time is beneficial in cool or humid environments, where they can achieve better bonding with an aggregate with high surface area.

### Water Phase

The asphalt emulsion includes water. More specifically, the asphalt emulsion includes the water phase present in an amount of from about 30 to about 50 weight percent based on a total weight of the asphalt emulsion. In various embodiments, the amount is from about 35 to about 45, or about 40 to about 45, weight percent based on a total weight of the asphalt emulsion. Typically, the water phase and the oil phase are present in a total amount of 100 wt% of the asphalt emulsion. In various non-limiting embodiments, all values and ranges of values, both whole and fractional, including and between those set forth above are hereby expressly contemplated for use herein.

### Latex Polymer

The asphalt emulsion and, more specifically, the water phase, also includes the latex polymer. The latex polymer can be any type of known in the art. In one embodiment, it is anionic. In another embodiment, it is cationic. The latex polymer itself typically is or includes styrene butadiene polymer. The latex polymer may be alternatively described as a mixture of the polymer and water, e.g. styrene butadiene dispersed in water. The latex polymer may be alternatively described as a latex or as a latex emulsion, which is different from the asphalt emulsion. This mixture of water and polymer may then be utilized in the water phase and in the asphalt emulsion as a whole. In such scenarios, the polymer itself may be present in water in any amount. However, the polymer is typically present in water in an amount of from about 40 to about 70, about 45 to about 65, about 50 to about 60, about 50 to about 55, about 60 to about 70, about 60 to about 65, or about 65 to about 70, weight percent based on a total weight of the mixture of the polymer and the water. The weight of the polymer in the water may also be described as a solids content of the latex polymer. The latex polymer may be free of styrene butadiene styrene (SBS).

In various embodiments, the amount of the latex polymer in the asphalt emulsion as a whole is from about 1.5 to about 5, about 2.5 to about 5, about 2 to about 4.5, about 2.5 to about 4, about 3 to about 3.5, or about 1.5, 2, 2.5, 3, 3.5, 4, 4.5, or 5, weight percent actives of the polymer based on a total weight of the asphalt emulsion. In other embodiments, the latex polymer may have a solids content of from about 60 to about 70, about 60 to about 65, or about 65 to about 70, weight percent. Alternatively, it is contemplated that these amounts may have a weight basis of the water phase. In various non-limiting embodiments, all values and ranges of values, both whole and fractional, including and between those set forth above are hereby expressly contemplated for use herein.

### Emulsifier

The asphalt emulsion, and again the water phase in particular, also includes the emulsifier. The emulsifier may be, include, consist essentially of, or consist of, the alkyl diamine and the fatty acid amine condensate. In various embodiments, the terminology "consist essentially of" describes embodiments wherein the emulsifier is free of other compounds, such as other amines, other condensates, other emulsifier, surfactants, etc.

In various embodiments, the emulsifier as a whole is present in the asphalt emulsion in an amount of from about 1 to about 5, about 1.5 to about 4.5, about 2 to about 4, about 2.5 to about 3.5, about 2.5 to about 3, about 1 to about 1.5, about 1 to about 2, about 1 to about 2.5, etc. weight percent based on a total weight of the asphalt emulsion. In various non-limiting embodiments, all values and ranges of values, both whole and fractional, including and between those set forth above are hereby expressly contemplated for use herein.

### Alkyl Diamine

The alkyl diamine is not particularly limited and may be any known in the art. In various embodiments, the alkyl diamine has from about 6 to about 50, about 6 to about 40, about 6 to about 30, about 6 to about 20, or about 6 to about 15, carbon atoms. The alkyl group may be linear or branched and may include, or be free of, cyclic portions. Each amine of the diamine may independently be a primary, secondary, or tertiary amine. The alkyl diamine may alternatively be a quaternary ammonium compound.

In various embodiments, the alkyl diamine may include, or be free of, one or more of the following: N-(Tallow alkyl)-1,3-propanediamine; N-(Tallowalkyl)trimethylenediamine; N-Tallow alkyltrimethylenediamines; N-Tallow-1,3-propylenediamine; N-Tallowalkyl-1,3-propanediamine; or combinations thereof. In one embodiment, the alkyl diamine is or includes N,N,N'-trimethyl-N'-tallow alkyltrimethylenediamine. N,N,N'-Trimethyl-N'-tallow alkyltrimethylenediamine is a quaternary ammonium compound with three methyl groups attached to nitrogen atoms. It is contemplated that variants may also be used, e.g. those with zero, 1, 2, or three, alkyl groups attached to the nitrogen atoms. The individual alkyl groups may have any number of atoms described above or alternatively may have 1, 2, 3, 4, 5, or 6 carbon atoms. The N,N,N'-Trimethyl-N'-tallow alkyltrimethylenediamine also includes long alkyl chain derived from tallow, which is a mixture of fatty acids primarily from animal fats typically including from 14 to 18 carbon atoms. Again, it is contemplated that variants may be used, e.g. those with a mixture of fatty acids derived from other natural sources such as soy, coconut oil, palm oil, shea butter, olive oil, soybean oil, sunflower oil, etc. The N,N,N'-Trimethyl-N'-tallow alkyltrimethylenediamine also includes a chain of three methylene (-CH₂) groups between two nitrogen atoms. Again, variants are contemplated for use wherein this chain of methylene groups may include 1, 2, 3, 4, 5, 6, or even more methylene groups between the nitrogen atoms. Alternatives may be quaternary ammonium compounds or not. In various non-limiting embodiments, all values and ranges of values, both whole and fractional, including and between those set forth above are hereby expressly contemplated for use herein.

The alkyl diamine is not particularly limited in the amount in which it is utilized. In various embodiments, the alkyl diamine is present in the asphalt emulsion in an amount of from about 0.2 to about 2.5, about 0.5 to about 2.5, about 1 to about 2, about 1 to about 1.5, about 1.5 to about 2, about 0.2 to about 0.5, about 0.25 to about 0.45, about 0.3 to about 0.4, about 0.35 to about 0.4, about 0.2, 0.3, 0.4, or 0.5, weight percent based on a total weight of the asphalt emulsion. In various non-limiting embodiments, all values and ranges of values, both whole and fractional, including and between those set forth above are hereby expressly contemplated for use herein.

### Fatty Acid Amine Condensate

The emulsifier also includes the fatty acid amine condensate. This condensate is the reaction product of a C16-C20 fatty acid and an polyamine. The fatty acid may have 16, 17, 18, 19, or 20 carbon atoms or may include a mixture of compounds having those number of carbon atoms. The fatty acid may be derived from a synthetic or natural source or may be a mixture of both. For example, the fatty acid may be saturated (no double bonds), monounsaturated (one double bond), or polyunsaturated (multiple double bonds). The fatty acid may be a saturated fatty acids such as Palmitic Acid (C16:0); Stearic Acid (C18:0); Arachidic Acid (C20:0); or combinations thereof. The fatty acid may be a monounsaturated fatty acid such as Palmitoleic Acid (C16:1); Oleic Acid (C18:1); Gondoic Acid (C20: 1); or combinations thereof. The fatty acid may be a polyunsaturated fatty acid such as Linoleic Acid (C18:2); α-Linolenic Acid (C18:3); Arachidonic Acid (C20:4); or combinations thereof. The fatty acid may be derived from Animal fats (tallow, lard); Fish oils (e.g., cod liver oil); Palm oil; Coconut oil; Olive oil; Avocado oil; Peanut oil; Sunflower oil; Soybean oil; Nuts and seeds (e.g., walnuts, flaxseeds); Dairy products (butter, cream); Cocoa butter; Shea butter; Meat (beef, pork, poultry); Eggs; or combinations thereof.

The polyamine is not particularly limited and may be any known in the art. Polyamines are typically aliphatic compounds with two or more amine groups. They can be linear or branched. In various embodiments, each of amine groups may independently be a primary, secondary, or tertiary amine group. In various embodiments, the polyamine is chosen from ethylenediamine (EDA); diethylenetriamine (DETA); triethylenetetramine (TETA); tetraethylenepentamine ; (TEPA); hexamethylenediamine (HMDA); polyethyleneimine (PEI); piperazine; 1,3-diaminopropane; 1,4-diaminobutane (Putrescine); N-methylpiperazine; 1,6-diaminohexane; spermidine; spermine; and combinations thereof.

The reaction of the fatty acid and the polyamine typically forms an amide bond via amidation wherein a carboxylic group of the fatty acid reacts with an amino group of the polyamine. Any reaction conditions known in the art may be used. For example, a moderately high temperature such as from about 150 to about 250°C, may be used and may be chosen to avoid degradation of the fatty acid or polyamine. A catalyst may or may not be used, e.g. acid or base catalysts such as sulfuric acid, p-toluenesulfonic acid, alkali hydroxides, etc. Any solvent may be used such as toluene, xylene, alcohols, etc. The reaction may form water as a byproduct which may be removed. The molar ratio of fatty acid to polyamine is not particularly limited and may be from about (0.1 to 1) to about (0.1 to 1). In various embodiment, the molar ratio is about 0.5:1; 0.75:1; 1:1; 1:0.75, 1:0.5, etc. Typical reaction times are from about 2 to 8 hours, depending on the reactivity of the fatty acid and polyamine. In various non-limiting embodiments, all values and ranges of values, both whole and fractional, including and between those set forth above are hereby expressly contemplated for use herein.

The fatty acid condensate is present in an amount of from about 0.2 to about 2.5 weight percent actives based on a total weight of the emulsifier. In various embodiments, this amount is from about 0.5 to about 2.5, about 1 to about 2, about 1 to about 1.5, about 1.5 to about 2, about 0.8 to about 1.2, about 0.8 to about 1, about 1 to about 1.2, about 0.2, 0.3, 0.4, 0.5, 0.6, 0.7, 0.8, 0.9, 1, 1.1, 1.2, etc., up to about 2.5, or about 0.5 to about 1.5, weight percent actives based on a total weight of the emulsifier. In various non-limiting embodiments, all values and ranges of values, both whole and fractional, including and between those set forth above are hereby expressly contemplated for use herein.

In addition to the latex polymer and the emulsifier, the asphalt emulsion, and the water phase in particular, also includes an additive present in an amount of from about 0.05 to about 0.5 weight percent actives based on a total weight of the asphalt emulsion. In various embodiments, the additive is present in an amount of from about 0.1 to about 0.45, about 0.15 to about 0.4, about 0.2 to about 0.35, about 0.25 to about 0.3, about 0.05 to about 1, about 0.06 to about 0.09, or about 0.07 to about 0.08, weight percent actives based on a total weight of the asphalt emulsion. In various non-limiting embodiments, all values and ranges of values, both whole and fractional, including and between those set forth above are hereby expressly contemplated for use herein.

### Additive

The asphalt emulsion also includes the additive. The additive includes or is a combination of two components: a C10-C20 alcohol that is alkoxylated with from about 15 to about 75 moles of ethylene oxide and from about 0 to about 60 moles of propylene oxide and is present in an amount of from about 10 to about 90 weight percent actives based on a total weight of the additive; and a C8-C24 alkylamine that is alkoxylated with from about 5 to about 25 moles of ethylene oxide and from about 0 to about 25 moles of propylene oxide and is present in an amount of from about 10 to about 90 weight percent actives based on a total weight of the additive. In various non-limiting embodiments, all values and ranges of values, both whole and fractional, including and between those set forth above are hereby expressly contemplated for use herein.

### First Component

The first component, i.e., the C10-C20 component, is an alkoxylated C10-C20 alcohol. The alcohol itself is not particularly limited and may be or include any known alcohol having 10 to 20 carbon atoms. In various embodiments, the alcohol has 10, 11, 12, 13, 14, 15, 16, 17, 18, 19, or 20 carbon atoms. In other embodiments, the alcohol has about 10 to about 20, about 11 to about 19, about 12 to about 18, about 13 to about 17, about 14 to about 16, or about 15 to about 16, carbon atoms. For example, the alcohol may be or include decanol (C10H22O); undecanol (C11H24O); dodecanol (C12H26O); tridecanol (C13H28O); tetradecanol (C14H30O); pentadecanol (C15H32O); hexadecanol (C16H34O); heptadecanol (C17H36O); octadecanol (C18H38O); nonadecanol (C19H40O); or combinations thereof. In one embodiment, the alcohol is tridecyl alcohol. In various non-limiting embodiments, all values and ranges of values, including and between those set forth above are hereby expressly contemplated for use herein.

The alcohol is alkoxylated with from about 15 to about 75 moles of ethylene oxide and from about 0 to about 60 moles of propylene oxide, meaning that the propoxylation is optional and may be omitted. In various embodiments, the number of moles of ethylene oxide is from about 20 to about 70, about 25 to about 65, about 30 to about 60, about 35 to about 55, about 40 to about 50, about 45 to about 50, about 40 to about 60, about 45 to about 55, or about 50 to about 55. In other embodiments, the number of moles of propylene oxide is zero or from about 5 to about 60, about 10 to about 55, about 15 to about 50, about 20 to about 45, about 25 to about 40, or about 30 to about 35. It is contemplated that butylene oxide may be used but is typically omitted. In various non-limiting embodiments, all values and ranges of values, both whole and fractional, including and between those set forth above are hereby expressly contemplated for use herein.

The alkoxylated alcohol is present in an amount of from about 10 to about 90 weight percent actives based on a total weight of the additive. In various embodiments, this amount is from about 15 to about 85, about 20 to about 80, about 25 to about 75, about 30 to about 70, about 35 to about 65, about 40 to about 60, about 45 to about 55, about 50 to about 55, or about 50, weight percent actives based on a total weight of the additive. In various non-limiting embodiments, all values and ranges of values, both whole and fractional, including and between those set forth above are hereby expressly contemplated for use herein.

### Second Component

The second component, i.e., the C8-C24 alkylamine component, is an alkoxylated C8-C24 alkylamine. In various embodiments, the alkylamine has 8, 9, 10, 11, 12, 13, 14, 15, 16, 17, 18, 19, 20, 21, 22, 23, or 24 carbon atoms. In other embodiments, the alkylamine has from about 8 to about 24, about 9 to about 23, about 10 to about 22, about 11 to about 21, about 12 to about 20, about 13 to about 19, about 14 to about 18, about 15 to about 17, or about 15 to about 16, carbon atoms. In various non-limiting embodiments, all values and ranges of values, including and between those set forth above are hereby expressly contemplated for use herein.

The alkylamine is not particularly limited and may be any known in the art. In various embodiments, the alkylamine is chosen from octylamine (C8H17NH2); nonylamine (C9H21NH2); decylamine (C10H23NH2); undecylamine (C11H25NH2); dodecylamine (C12H27NH2); tridecylamine (C13H29NH2); tetradecylamine (C14H31NH2); pentadecylamine (C15H33NH2); hexadecylamine (C16H35NH2); heptadecylamine (C17H37NH2); octadecylamine (C18H39NH2); nonadecylamine (C19H41NH2); eicosylamine (C20H43NH2); heneicosylamine (C21H45NH2); docosylamine (C22H47NH2); tricosylamine (C23H49NH2); tetracosylamine (C24H51NH2), and combinations thereof. In one embodiment, the amine is cocoamine. The alkyl portion may be linear or branched and may include cyclic portions or be free of cyclic portions. The amine may be a primary, secondary, or tertiary amine.

The amine is alkoxylated with from about 5 to about 25 moles of ethylene oxide and from about 0 to about 25 moles of propylene oxide, meaning that the propoxylation is optional and may be omitted. In various embodiments, the number of moles of ethylene oxide is from about 5 to about 20, about 10 to about 15, about 15 to about 20, or about 10 to about 20. In various embodiments, the number of moles of propylene oxide is zero or about 5 to about 25, about 5 to about 20, about 10 to about 15, about 15 to about 20, or about 10 to about 20. It is contemplated that butylene oxide may be used but is typically omitted. In various non-limiting embodiments, all values and ranges of values, both whole and fractional, including and between those set forth above are hereby expressly contemplated for use herein.

The alkoxylated C8-C24 alkylamine is present in an amount of from about 10 to about 90 weight percent actives based on a total weight of the additive. In various embodiments, this amount is from about 15 to about 85, about 20 to about 80, about 25 to about 75, about 30 to about 70, about 35 to about 65, about 40 to about 60, about 45 to about 55, about 50 to about 55, or about 50, weight percent actives based on a total weight of the additive. In various non-limiting embodiments, all values and ranges of values, both whole and fractional, including and between those set forth above are hereby expressly contemplated for use herein.

In various embodiments, the additive is present in the asphalt emulsion in an amount of from about 0.05 to about 0.5, about 0.1 to about 0.45, about 0.15 to about 0.4, about 0.2 to about 0.35, about 0.25 to about 0.35, about 0.05 to about 0.1, about 0.06 to about 0.09, or about 0.07 to about 0.08, weight percent actives based on a total weight of the asphalt emulsion. In other embodiments, the alkoxylated C10-C20 alcohol is present in the asphalt emulsion is present in an amount that is about 1, 5, 10, 15, 20, 25, 30, 35, 40, 45, 50, 55, 60, 65, 70, 75, 80, 85, 90, 95, or 99, wt% of the total amount of the additive as described immediately above. In other embodiments, the alkoxylated C10-C20 alcohol is present in an amount of from about 0.05 to about 0.15, about 0.1 to about 0.15, about 0.05 to about 0.1, about 0.06 to about 0.09, or about 0.07 to about 0.08, weight percent actives based on a total weight of the asphalt emulsion. In other embodiments, the alkoxylated C8-C24 alkylamine is present in the asphalt emulsion is present in an amount that is about 1, 5, 10, 15, 20, 25, 30, 35, 40, 45, 50, 55, 60, 65, 70, 75, 80, 85, 90, 95, or 99, wt% of the total amount of the additive as described immediately above. In other embodiments, the alkoxylated C8-C24 alkylamine is present in an amount of from about 0.05 to about 0.15, about 0.1 to about 0.15, about 0.05 to about 0.1, about 0.06 to about 0.09, or about 0.07 to about 0.08, weight percent actives based on a total weight of the asphalt emulsion. In various non-limiting embodiments, all values and ranges of values, both whole and fractional, including and between those set forth above are hereby expressly contemplated for use herein.

### Oil Phase

Referring now to the oil phase, the oil phase is present in an amount of from about 50 to about 70 weight percent based on a total weight of the asphalt emulsion. In various embodiments, this amount is from about 55 to about 65, about 55 to about 60, or about 60 to about 65, weight percent based on a total weight of the asphalt emulsion. As first introduced above, the amount of the oil phase plus the amount of the water phase typically sums to 100 total weight percent. In various non-limiting embodiments, all values and ranges of values, both whole and fractional, including and between those set forth above are hereby expressly contemplated for use herein.

The oil phase includes asphalt. As is known in the art, sometimes the oil phase is the asphalt itself. Asphalt is typically defined by ASTM D8 as a dark brown to black cementitious material in which the predominant constituent is bitumen that occurs in nature or is obtained in petroleum processing. The asphalt may be of any kind known in the art and may be alternatively described as bitumen. Asphalt typically includes a complex mixture of hydrocarbons, including saturated, aromatic, and polar compounds. All types of asphalt, e.g. naturally occurring, synthetically manufactured, modified and recovered asphalt, may be used herein.

### Additional Components

The asphalt emulsion may alternatively include or be free of one or more additional components. For example, the asphalt emulsion may include, or be free of, surfactants such as an anionic, cationic, non-ionic, and/or amphoteric surfactants that are not any required herein. In addition, the asphalt emulsion may include, or be free of, polymers that, for example, improve flexibility, elasticity, and resistance to deformation, such as styrene-butadiene-styrene (SBS), ethylene-vinyl acetate (EVA), etc. The asphalt emulsion may also include, or be free of, antioxidants, fillers such as calcium carbonate or silica, used to improve performance and reduce costs, fibers such as those used to enhance mechanical properties and reduce cracking, solvents such as petroleum distillates and kerosene, stabilizers such as clays or silica, pH adjusters, etc.

In still other embodiments, this disclosure provides a mixture of the emulsifier and the additive. For example, such a mixture may be, include, consist essentially of, or consist of, the emulsifier and the additive. In other embodiments, the disclosure provides a mixture of the latex polymer, the emulsifier, and the additive. For example, such a mixture may be, include, consist essentially of, or consist of, the latex polymer, the emulsifier, and the additive. In still other embodiments, a mixture may be, include, consist essentially of, or consist of, water, the latex polymer, the emulsifier, and the additive. These components may be present in any of these mixtures in any amounts described herein or known in the art. In various embodiments, the terminology "consist essentially of" describes embodiments of the mixtures that are free of one or more polymers, emulsifiers, additives, or additional components, apart from 2(a), 2(b), 3(a), and 3(b) of the claims, e.g. any optional components described herein or those known in the art.

### Paving Material

This disclosure also provides a paving material which may be alternatively described as a paving composition or as a mix design or as an asphalt mixture. The paving material includes the asphalt emulsion and an aggregate. In the paving material itself, the asphalt emulsion may be present in an amount of from about 1 to about 20, about 1 to about 15, about 5 to about 10, or about 1, 2, 3, 4, 5, 6, 7, 8, 9, 10, 11, 12, 13, 14, 15, 16, 17, 18, 19, or 20, weight percent based on a total weight of the paving material. In various non-limiting embodiments, all values and ranges of values, both whole and fractional, both between and including each of the above, are hereby expressly contemplated for use herein.

The aggregate may be any known in the art and may include sand, gravel, or crushed stone. The aggregate may include natural aggregate, manufactured aggregate, or a combination thereof. The aggregate may be any known in the art and may include crushed stone; gravel; sand; recycled pavement (rap); granite; limestone; slate; basalt; river rock; porous aggregates; quarry dust; concrete rubble; blast furnace slag; cinder; expanded clay aggregate, and/or combinations thereof.

The aggregate may be present in an amount of from about 80 to about 99, about 85 to about 95, about 85 to about 90, about 90 to about 99, about 90 to about 95, about 95 to about 99, or about 80, 81, 82, 83, 84, 85, 86, 87, 88, 89, 90, 91, 92, 93, 94, 95, 96, 97, 98, or 99, weight percent based on a total weight of the paving material. In various non-limiting embodiments, all values and ranges of values, both whole and fractional, both between and including each of the above, are hereby expressly contemplated for use herein.

### Mix Time

Mix time is a factor in asphalt production and plays a significant role in determining the performance and workability of the asphalt mixture including the aggregate. Proper mix time increases the chance that the asphalt is evenly coated over the aggregate. If the mix time is too short, the asphalt may not properly cover the aggregate surfaces, leading to weak bonding and reduced performance of the asphalt. In addition, such a mixture will not be workable enough to apply on a surface of a road. Adequate mix time minimizes segregation of the asphalt by increasing the chance that all the components are evenly distributed.

Asphalt mixture also typically need to have a consistent, uniform structure to increase the chance that long-term performance. Proper mixing increase the chance that a homogenous blend of fine and coarse aggregates, bitumen, and any added materials. If the mixing process is inadequate or the time is too short, the coarse and fine particles may not bind properly, leading to poor homogeneity.

While sufficient mix time can be useful, overmixing can cause damage to the aggregate particles, particularly in drum mixing processes, where the aggregate can lose its shape and strength. Overmixed asphalt can lead to breakdowns in particle size, which negatively affects pavement performance. Excessive mix time can also affect curing and setting of the mixture leading to poor cohesion and cause a delay to open the roads for regular usage.

Excessive mix time can also lead to excessive exposure of the asphalt to heat and air, which can cause oxidation, making the bitumen brittle and reducing its flexibility. This can lead to premature cracking in the pavement.

Proper mixing increases the chance that the asphalt mixture meets required specifications and standards, resulting in longer-lasting pavements with reduced risks of early failure such as rutting, cracking, or potholes. In addition, proper mixing increases the chance that the mixture can withstand the load stresses imposed by vehicles without significant deformation, thus enhancing the load-bearing capacity of the pavement.

With appropriate mix time, the correct amount of materials is used efficiently, minimizing costly rework or material wastage. Pavements produced using asphalts mixed with the correct mix time will likely have fewer defects, reducing the need for frequent maintenance and repair, which results in long-term savings.

In various embodiments, the paving material exhibits a mix time of at least about 120 seconds measured at 77°F in seconds according to ISSA: TB-113. In other embodiments, the paving material exhibits a mix time of from about 120 to about 450, about 150 to about 400, about 200 to about 350, or about 250 to about 300, seconds measured at 77°F in seconds according to ISSA: TB-113. In various non-limiting embodiments, all values and ranges of values, both whole and fractional, both between and including each of the above, are hereby expressly contemplated for use herein.

### Cohesion

Cohesion is also a factor in asphalt applications and describes an internal bonding strength of the asphalt mixture including the aggregate. Cohesion typically describes the force that holds the asphalt mixture together enabling the ultimate pavement to resist forces such as traffic loads, environmental conditions, and aging.

Cohesion increases the chance that the asphalt mixture has enough internal strength to hold together under heavy loads from vehicles. This resistance to deformation and disintegration is useful for maintaining the pavement's structure. A cohesive asphalt mixture is also less likely to crack or rut under repeated traffic stresses. Cracking can occur without sufficient cohesion, leading to premature failures like fatigue cracking or thermal cracking.

Adequate cohesion also minimizes the chance that the aggregate will separate from the asphalt particles. Without sufficient cohesion, aggregates can become loose, causing issues like raveling, which compromises the pavement's surface.

Pavements typically must remain uniform throughout their life span. Cohesion helps increase the chance that the asphalt mixture retains its structure, minimizing segregation of fine and coarse aggregates, which could otherwise lead to weak spots in the pavement.

Cohesion also minimizes moisture infiltration. Asphalt mixtures that lack sufficient cohesion are more prone to water damage, as water can penetrate the mix and weaken the bonds between aggregates and asphalt, leading to stripping and subsequent pavement deterioration.

Cohesive asphalt mixtures also tend to be better at resisting thermal stresses caused by temperature changes. Cohesion increases the chance that the asphalt remains flexible in cold conditions (resisting thermal cracking) and stable in high temperatures (resisting softening or rutting).

During a paving process, asphalt mixtures need to be compacted to increase the chance that density and reduce air voids. A cohesive asphalt mixture allows for easier compaction because the materials bind well together during the rolling process, resulting in a denser, more stable pavement.

The higher the cohesion in an asphalt mixture, the more durable and longer-lasting the pavement will be. This is because the pavement will be more resistant to disintegration caused by mechanical stresses (traffic) or environmental factors (water, temperature). Pavements with poor cohesion are more prone to developing premature distress, such as cracking, potholes, and surface defects. Ensuring good cohesion improves the longevity of the pavement and reduces the need for frequent repairs.

Pavements with strong cohesive bonds also require less frequent repairs and maintenance, resulting in long-term cost savings for highway departments and municipalities. For example, cohesion increases the chance that the asphalt and aggregates remain intact during the laying process, reducing the risk of wasted materials and ensuring the full use of the asphalt mix.

In various embodiments, the pavement materials exhibits a cohesion of at least 12 kg-cm measured at 77°F, Setting Time 0.5 hour according to ISSA TB-139. In other embodiments, the cohesion is from about 12 to about 35, about 15 to about 30, or about 20 to about 25, kg-cm measured at 77°F, Setting Time 0.5 hour according to ISSA TB-139. In various non-limiting embodiments, all values and ranges of values, both whole and fractional, both between and including each of the above, are hereby expressly contemplated for use herein.

In other embodiments, the pavement material exhibits a cohesion of at least about 20 kg-cm Traffic Time 1 hour according to ISSA TB-139. In other embodiments, the cohesion is about 20 to about 35 or about 25 to about 30, kg-cm Traffic Time 1 hour according to ISSA TB-139. In various non-limiting embodiments, all values and ranges of values, both whole and fractional, both between and including each of the above, are hereby expressly contemplated for use herein.

### Wet Track Abrasion

Wet Track Abrasion Testing (WTAT) is a test used to assess the durability and resistance to wear of asphalt emulsions and asphalt mixtures, particularly slurry seals and micro-surfacing mixtures, under wet conditions. It simulates how well these thin layers of asphalt and aggregate can resist abrasion when exposed to traffic and environmental conditions like rain, moisture, and traffic loading. The test helps evaluate the performance of these asphalt mixtures, ensuring they can maintain their protective function over time.

By verifying that the asphalt mixture can resist abrasion, Wet Track Abrasion Testing helps increase the chance that the layer of asphalt and aggregate remains intact for longer periods, delaying the need for more expensive rehabilitation or resurfacing of the pavement.

Pavements are frequently exposed to moisture from rain, snow, or surface water. Wet Track Abrasion Testing replicates these conditions by testing the asphalt mixture while wet, providing a more realistic evaluation of how the asphalt mixture will perform in real-world environments. The Wet Track Abrasion Test also increases the chance that the mixture has sufficient cohesion to remain durable and intact despite exposure to moisture.

In addition to moisture, pavement surfaces are constantly exposed to traffic-induced abrasion, especially in high-traffic areas. Wet Track Abrasion Testing simulates the stresses applied by vehicle tires, ensuring that the asphalt treatment can resist being worn away by repeated traffic loads. A asphalt mixture that easily abrades under traffic and moisture can lead to defects such as raveling, where aggregate particles come loose from the surface, or surface thinning, where the protective layer wears away, exposing the underlying asphalt. Wet Track Abrasion Testing increases the chance that the asphalt mixture maintains integrity, minimizing such issues.

Wet Track Abrasion Testing is also a tool for determining an optimal composition of slurry seals and micro-surfacing mixtures. It helps fine-tune the proportions of asphalt emulsion, water, aggregate, and additives to increase the chance that the mix can resist wear under wet conditions. By assessing the resistance to abrasion, Wet Track Abrasion Testing helps in selecting the best materials for a specific project, considering factors such as aggregate type, asphalt properties, and asphalt emulsion formulation. This increases the chance that the asphalt mixture performs well in the intended environmental and traffic conditions.

Asphalt mixtures that pass the Wet Track Abrasion Test are more likely to last longer in service, reducing the need for frequent maintenance or reapplication. This results in significant cost savings for road agencies and municipalities by extending the service life of the pavement and delaying major repairs. Asphalt mixtures that perform well in WTAT testing are also more resistant to wear, meaning fewer surface defects such as cracks, raveling, and potholes develop over time. This lowers the overall cost of maintaining the road network.

An asphalt mixture that resists abrasion maintains its texture, which is a factor in ensuring good skid resistance. Wet and worn surfaces can become smooth and slippery, reducing traction and increasing the risk of accidents. Wet Track Abrasion Testing helps increase the chance that the pavement retains its texture, enhancing safety.

Wet Track Abrasion Testing is particularly useful in regions where wet weather conditions are frequent, such as areas with heavy rainfall or high humidity. Pavements in these regions are more prone to moisture-related wear, and the Wet Track Abrasion Test increases the chance that the selected asphalt mixture will perform well despite these challenges.

In cold climates, pavements experience freeze-thaw cycles, where moisture within the pavement freezes and expands, leading to cracking and surface degradation. Wet Track Abrasion Testing helps increase the chance that the asphalt mixture can withstand these conditions, maintaining its integrity through repeated freezing and thawing.

By extending the life of the pavement surface, treatments that pass Wet Track Abrasion Testing help conserve resources, such as aggregates and asphalts, that would otherwise be required for more frequent maintenance or resurfacing. Fewer surface repairs and applications mean fewer construction activities, which reduces greenhouse gas emissions from material production, transportation, and equipment use. Ensuring that the asphalt mixture performs well under wet conditions through Wet Track Abrasion Testing contributes to more sustainable road maintenance practices.

Wet Track Abrasion Testing is also often used as a quality control test to increase the chance that the slurry seal or micro-surfacing mixture meets the required specifications for abrasion resistance. By testing asphalt mixtures in a controlled laboratory setting, Wet Track Abrasion Testing provides valuable data on how the asphalt mixture will perform in the field, allowing for adjustments to the mix design if necessary.

In various embodiments, the paving material exhibits a Wet Track Abrasion of from about zero to about 55, about 5 to about 50, about 10 to about 45, about 15 to about 40, about 20 to about 35, or about 25 to about 30, g/ft² measured at 1 hour soak, according to ISSA TB-100. In various non-limiting embodiments, all values and ranges of values, both whole and fractional, both between and including each of the above, are hereby expressly contemplated for use herein.

In other embodiments, the paving material exhibits a Wet Track Abrasion of from about 0 to about 80, about 5 to about 75, about 10 to about 70, about 15 to about 65, about 20 to about 60, about 25 to about 55, about 30 to about 50, about 35 to about 45, or about 40 to about 45 g/ft² measured at 6 day soak, according to ISSA TB-100. In various non-limiting embodiments, all values and ranges of values, both whole and fractional, both between and including each of the above, are hereby expressly contemplated for use herein.

### Excess Asphalt by Loaded Wheel Test

The Excess Asphalt by Loaded Wheel Test (also known as the Hamburg Wheel Tracking Test or LWT) is also a test used in asphalt applications to evaluate the rutting potential and moisture susceptibility of asphalt mixtures, especially in situations where excess asphalt may lead to performance issues. This test helps increase the chance that the asphalt mixture will perform well under heavy traffic loads and environmental conditions.

Rutting refers to the formation of grooves or depressions in pavement, typically in the wheel paths of vehicles. Rutting is more likely when the asphalt mixture contains an excessive amount of asphalt, leading to a softer mix that deforms under load. The Excess Asphalt by Loaded Wheel Test simulates repeated loading on the pavement, allowing engineers to assess whether the asphalt mixture is prone to rutting. By subjecting the asphalt mixture to a series of simulated wheel loads, the test helps determine whether the pavement can withstand high traffic volumes without deforming. This is especially useful for highways and roads subjected to heavy vehicle traffic.

When an asphalt mixture includes too much asphalt, the excess asphalt may migrate to the surface under the weight of traffic, causing issues such as asphalt "bleeding" or "flushing." This results in a shiny, oily surface that is slippery and unsafe for vehicles, particularly in wet conditions. The Loaded Wheel Test helps identify whether the asphalt mixture has too much asphalt and is susceptible to such failures.

An optimal amount of asphalt is necessary to increase the chance that the asphalt mixture is stable and durable. Too much asphalt can cause the mix to become soft and unstable, leading to performance problems such as rutting and deformation. The test increases the chance that the mix has the right balance of asphalt to maintain stability.

In addition to rutting, the Loaded Wheel Test also evaluates the asphalt mixture for moisture susceptibility, specifically stripping. Stripping occurs when water infiltrates the pavement and causes the asphalt to separate from the aggregate, leading to weakened bonds and premature pavement failure. The test simulates wet conditions, helping to determine whether the mix is prone to stripping when exposed to moisture.

Pavements often face exposure to water from rain, snow, or ice. The Loaded Wheel Test increases the chance that the asphalt mixture can withstand both traffic loads and moisture without experiencing significant damage, which applies to pavements in wet or humid climates.

This test also subjects the asphalt mixture to repeated wheel loads, mimicking the conditions that pavements experience over their service life. This helps predict how the asphalt mixture will perform over time, especially in areas with heavy traffic. Asphalt mixtures that pass the Excess Asphalt by Loaded Wheel Test are less likely to suffer from rutting or deformation, leading to more durable pavements.

By identifying potential performance issues such as rutting or moisture susceptibility early on, the test helps minimize premature pavement failures. This reduces the need for costly repairs and maintenance, leading to long-term savings for transportation agencies and road owners.

This test also helps verify that the asphalt mixture design is appropriate for the expected traffic loads and environmental conditions. If the mixture includes excess asphalt or is prone to moisture damage, adjustments can be made to the mix design, such as reducing the asphalt content, using a stiffer asphalt, or improving the aggregate gradation.

Different regions and road types have unique requirements based on traffic and climate conditions. The Loaded Wheel Test allows engineers to tailor the mix design to meet the specific demands of the project, ensuring that the pavement will perform well under those conditions.

Moreover, rutting can create dangerous driving conditions, especially in wet weather, where water can pool in the ruts, leading to hydroplaning. By ensuring the asphalt mixture resists rutting through the Loaded Wheel Test, road safety is improved.

Pavements that resist rutting provide a smoother driving surface, enhancing ride quality. Pavement that deforms under load can lead to a bumpy, uneven ride, which reduces driving comfort and can cause wear and tear on vehicles.

By optimizing the asphalt mixture design to minimize the inclusion of excess asphalt, the test helps avoid material waste. Excessive asphalt not only leads to performance issues but also increases costs, as more asphalt is used than necessary. Increasing the chance that the asphalt mixture resists deformation and moisture damage extends the life of the pavement, reducing the need for frequent repairs and repaving. This contributes to more sustainable infrastructure by minimizing resource consumption and environmental impact.

In various embodiments, the paving material exhibits an Excess Asphalt by Loaded Wheel Test of about 0 to about 50, about 5 to about 45, about 10 to about 40, about 15 to about 35, about 20 to about 30, or about 25 to about 30, measured according to ISSA TB-109. In various non-limiting embodiments, all values and ranges of values, both whole and fractional, both between and including each of the above, are hereby expressly contemplated for use herein.

### Schulze-Breuer and Ruck (SBR) Abrasion Loss

The SBR Abrasion Loss Test is used to measure the resistance of an asphalt mixture to abrasion and wear when styrene-butadiene polymer is added to the asphalt emulsion formulation. The abrasion loss refers to the amount of material that wears away from the asphalt surface under repeated stresses such as traffic, weather, and mechanical wear.

Abrasion from traffic, especially heavy loads, can wear down asphalt over time, leading to raveling, potholes, and other surface defects. The Abrasion Loss Test measures how well the asphalt mixture, enhanced with polymer, can withstand this wear. Lower abrasion loss values indicate better resistance to surface wear.

By reducing the rate of surface wear, polymer extends the service life of pavements. This is particularly useful in high-traffic areas, such as highways, urban streets, and intersections, where surface wear is accelerated. Asphalt that includes polymer is more flexible at low temperatures and more stable at high temperatures. This flexibility helps minimize surface cracking due to thermal expansion and contraction. The abrasion loss test increase the chance that the asphalt mixture can resist wear even under extreme temperature conditions.

In climates with frequent freeze-thaw cycles, asphalt can become brittle and prone to cracking. The polymer improves resilience, and the abrasion loss test helps increase the chance that the mixture can resist damage from harsh weather conditions such as freezing, thawing, or excessive heat.

Relative to rutting, asphalt mixtures that include polymer latex have higher elasticity and strength, which helps the pavement maintain its shape under load. The abrasion loss test helps confirm that the pavement can resist rutting over time.

Relative to raveling, polymer latex allows the asphalt mixture to be more robust, reducing the likelihood of aggregate loss and keeping the pavement surface intact. The Abrasion Loss Test increase the chance that the mix resists this form of surface deterioration.

Pavements with low abrasion loss also tend to have fewer defects, such as cracks, raveling, and potholes. By enhancing the asphalt mixture with polymer latex and ensuring it has low abrasion loss, pavements can remain in good condition for longer periods, reducing the need for frequent repairs or resurfacing.

While the addition of polymer latex to asphalt formulations may increase initial construction costs, the long-term savings due to reduced maintenance and extended pavement life often outweigh the upfront investment. The abrasion loss test helps quantify these potential savings by predicting the pavement's performance over time.

Furthermore, the Abrasion Loss Test helps determine the asphalt mixture's ability to withstand high volumes of traffic, particularly from heavy vehicles such as trucks and buses as it evaluates the compatibility of the chemistry of aggregates with additives/emulsifiers of the asphalt emulsion. By improving the asphalt's elasticity and wear resistance, polymer latex allows the pavement to handle heavier loads without suffering from excessive wear. When asphalt wears down due to heavy loads, surface defects like cracking, potholes, and surface roughness occur. The abrasion loss test helps assess whether the asphalt mixture that includes polymer latex can endure these traffic stresses while maintaining its surface integrity.

As asphalt wears down, it also becomes smoother, which can reduce the friction between vehicle tires and the pavement. This decreases skid resistance and increases the likelihood of accidents, particularly in wet conditions. By improving the durability of the surface through the addition of polymer latex and measuring abrasion loss, engineers can increase the chance that the pavement retains its texture and skid resistance over time. Surface wear can lead to hazards such as potholes and cracks, which pose risks to drivers, cyclists, and pedestrians. Low abrasion loss values indicate that the polymer latex modified asphalt mixture is less likely to develop these surface issues, thus improving overall road safety.

By extending the lifespan of pavements and reducing the need for frequent repairs or resurfacing, asphalt mixtures that include polymer latex conserve resources such as asphalt, aggregates, and construction materials. The abrasion loss test helps increase the chance that the asphalt mixture will perform well for an extended period, minimizing the need for new materials.

In various embodiments, the paving material exhibits an SBR Abrasion Loss of from about 0 to about 2, about 0 to about 1, about 0.5 to about 1.5, or about 1 to about 2, measured according to ISSA TB-144. In various non-limiting embodiments, all values and ranges of values, both whole and fractional, both between and including each of the above, are hereby expressly contemplated for use herein.

### Synergies

In asphalt applications, achieving durable and high-performing pavements requires coordination of various factors such as mix time, cohesion, wet track abrasion resistance, excess asphalt by Loaded Wheel Test results, and SBR abrasion loss. These elements work together to increase the chance that the asphalt mixture can withstand the stresses imposed by traffic, weather, and environmental conditions, while maintaining its structural integrity and functionality over time. For example adequate mix time increases the chance that the aggregate is fully coated with the asphalt, contributing to the cohesion of the asphalt mixture. If the mix time is too short, the asphalt may not adhere well to the aggregate, resulting in poor cohesion, increased susceptibility to raveling, and surface degradation. Properly mixed asphalt with adequate cohesion increase the probability of better performance in wet track abrasion tests and SBR abrasion loss tests, as the asphalt fully envelops the aggregate, protecting the surface from wear caused by moisture, traffic, and weather. Proper mix time also increases the chance that the asphalt is adequately distributed and does not exceed the optimal amount, minimizing issues like bleeding or flushing. Furthermore, good cohesion increases the chance that the aggregate stays locked in place, minimizing excessive deformation under load. Together, these factors help achieve a stable mix that performs well in the Loaded Wheel Test.

Furthermore, asphalt mixtures with strong cohesion are less likely to abrade under wet conditions, as tested by the Wet Track Abrasion Test (WTAT). In wet environments, cohesive mixtures resist the degradation that occurs when water infiltrates the surface, protecting the pavement from stripping and erosion. High cohesion also increases the chance that the asphalt mixture can withstand the mechanical stresses imposed by the Loaded Wheel Test, which simulates traffic loads. In Wet Track Abrasion Test (WTAT) combined with Loaded Wheel Test is possible to determine the ideal amount of asphalt to the mixture where it prevents rutting and loss of aggregates.

Moreover, the asphalt mixture's resistance to wet abrasion depends on the cohesion of the mixture, which is enhanced by proper mix time. A well-mixed, cohesive asphalt mixture is less likely to erode when exposed to water, as the asphalt firmly adheres to the aggregate, minimizing surface wear.

Even further, the excess asphalt by Loaded Wheel Test and SBR abrasion loss both benefit from a mixture with high wet track abrasion resistance. If the asphalt mixture can withstand wet abrasion, it is more likely to endure heavy traffic without deteriorating, reducing the risk of rutting, raveling, or asphalt flushing. Pavements that pass the Loaded Wheel Test are also more likely to resist deformation and wear in wet track abrasion tests and SBR abrasion loss tests. Asphalt mixtures that perform well in the Loaded Wheel Test often have a balanced asphalt content and adequate cohesion, both of which are essential for resisting wear and deformation over time.

Asphalt mixtures that perform well in the Loaded Wheel Test show good resistance to rutting, while those that pass wet track abrasion tests resist surface wear, especially in moist environments. The addition of polymer latex improves both aspects, ensuring the pavement can withstand traffic loads without excessive wear or deformation.

Additionally, asphalt emulsions modified with polymer latex exhibit improved cohesion, allowing them to better resist wear in wet track abrasion tests. Polymer latex also reduces the amount of wear observed in the Loaded wheel test and wet abrasion loss in Wet Track test (WTAT), as the material's flexibility minimizes abrasion, rutting and cracking under load.. The improved bonding between aggregate and asphalt due to the latex further enhances the pavement's performance, reducing the loss of aggregate particles.

The combination of high cohesion, optimal mix time, and the addition of the latex results in a pavement that resists surface abrasion and deformation. This synergy leads to longer-lasting pavements with reduced maintenance requirements and improved surface durability. When all these factors are in balance, the result is a durable pavement that resists rutting, moisture damage, and surface abrasion, leading to reduced maintenance costs and longer service life. This synergy is particularly useful for high-traffic roads and areas subjected to extreme weather conditions.

The paving material may be formed using any method known in the art. For example, the paving material may be formed using a method including the step of providing the asphalt described herein and combining the asphalt emulsion with the aggregate, as also described herein.

### Additional Embodiments

This disclosure also provides an asphalt emulsion including a water phase and an oil phase. The water phase is present in an amount of from about 30 to about 50 weight percent based on a total weight of the asphalt emulsion. The water phase includes the latex polymer, the emulsifier, and the additive. The latex polymer includes the styrene butadiene. In this embodiment, the emulsion and the emulsifier itself is free of, or includes less than 2.5, 2, 1.5, 1, 0.5, 0.4, 0.3, 0.2, 0.1, 0.05, or 0.01, weight percent actives of the alkyl diamine, based on a total weight of the emulsifier. In such embodiments, the emulsifier still includes the fatty acid amine condensate that is the reaction product of the C16-C20 fatty acid and the polyamine. However, in such embodiments, the amount of the fatty acid amine condensate is contemplated to increase up to a maximum amount of about 3 weight percent actives, e.g. 2.6, 2.7, 2.8, 2.9, or about 3 weight percent actives, based on a total weight of the emulsifier. In various non-limiting embodiments, all values and ranges of values, both whole and fractional, both between and including each of the above, are hereby expressly contemplated for use herein.

In various embodiments, the additive is present in an amount of from about 0.05 to about 0.5 weight percent actives based on a total weight of the asphalt emulsion. The additive includes the C10-C20 alcohol that is alkoxylated with from about 15 to about 75 moles of ethylene oxide and from about 0 to about 60 moles of propylene oxide and is present in an amount of from about 10 to about 90 weight percent actives based on a total weight of the additive. The additive also includes the C8-C24 alkylamine that is alkoxylated with from about 5 to about 25 moles of ethylene oxide and from about 0 to about 25 moles of propylene oxide and is present in an amount of from about 10 to about 90 weight percent actives based on a total weight of the additive. The oil phase is present in an amount of from about 50 to about 70 weight percent based on a total weight of the asphalt emulsion and includes asphalt. In various non-limiting embodiments, all values and ranges of values, both whole and fractional, both between and including each of the above, are hereby expressly contemplated for use herein.

### EXAMPLES

A series of asphalt emulsions are formed and evaluated to determine multiple physical properties, as set forth below.

| | **Comparative Composition 1** | **Composition 1** | **Composition 2** |
|---|---|---|---|
| **Oil Phase** | | | |
| Asphalt PG 64/22 | 62 | 62 | 62 |

| **Water Phase** | | | |
|---|---|---|---|
| Cationic Latex Polymer Dispersion 1 | 3.5 | - | - |
| Anionic Latex Polymer Dispersion 1 | - | 3.5 | - |
| Anionic Latex Polymer Dispersion 2 | - | - | 3.5 |
| Emulsifier: | 1.3 | 1.3 | 1.3 |
| Alkyl Diamine | 0.4 | 0.4 | 0.4 |
| Fatty Acid Amine Condensate | 0.9 | 0.9 | 0.9 |
| Additive: | - | 0.14 | 0.14 |
| Alkoxylated C10-C20 Alcohol | - | 0.07 | 0.07 |
| Alkoxylated C8-C24 Alkylamine | - | 0.07 | 0.07 |
| Water | To 100 | To 100 | To 100 |
| HCl acid 38% to balance pH | 1.1 | 1.05 | 1.05 |
| pH of water phase | 1.7 | 1.7 | 1.7 |

Asphalt PG 64-22 is a Performance Graded (PG) asphalt commercially available from different companies and terminals, like ExxonMobil.

Cationic Latex Polymer Dispersion 1 is an aqueous, high solids, cold-polymerized, cationic styrene-butadiene dispersion commercially available from BASF Corporation.

Anionic Latex Polymer Dispersion 1 is an aqueous, high solids, cold-polymerized, anionic styrene-butadiene dispersion commercially available from BASF Corporation.

Anionic Latex Polymer Dispersion 2 is an aqueous, high solids, cold-polymerized, anionic styrene-butadiene dispersion commercially available from BASF Corporation.

Emulsifier is a combination of N,N,N'-Trimethyl-N'-tallow alkyltrimethylenediamine as the alkyl diamine and the reaction product of tall oil fatty acid + polyethyleneamines as the fatty acid amine condensate.

Additive is a combination of a C11-C14 alcohol ethoxylated with 50 moles of ethylene oxide as the alkoxylated C10-C20 alcohol and ethoxylated cocoamine ethoxylated with 15 moles of ethylene oxide as the alkoxylated C8-C24 alkylamine.

After formation, the Comparative Composition 1 and the Compositions 1 and 2 are combined with various aggregates and evaluated to determine the following physical properties.

### Limestone Aggregate:

Comparative Composition 1 and the Compositions 1 and 2 are each independently mixed for form asphalt emulsions. The asphalt emulsions are then combined with a limestone aggregate to form paving compositions (i.e., mix designs). The amount of the asphalt emulsion added to the limestone aggregate is 12g for every 100g of aggregate. In addition, 7g of water and 1g of cement is also added for every 100g of aggregate. The cement is Portland cement which is known in the art to include four main compounds: tricalcium silicate (3CaO · SiO2), dicalcium silicate (2CaO · SiO2), tricalcium aluminate (3CaO · Al2O3), and a tetra-calcium aluminoferrite (4CaO · Al2O3Fe2O3).

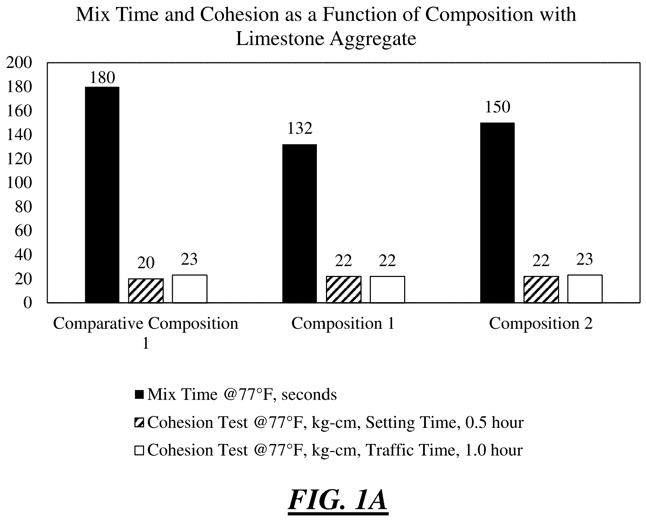

After the paving compositions are formed, samples of each are evaluated to determine Mix Time at 77°F in seconds according to ISSA: TB-113; Test Method for Determining Mix Time for Slurry Surfacing Systems. The results are set forth in Fig. 1A.

After the paving compositions are formed, samples of each are also evaluated to determine Cohesion at 77°F, kg-cm, Setting Time 0.5 hour according to ISSA TB-139; Test Method to Determine Set and Cure Development of Slurry Surfacing Systems by Cohesion Tester. The results are set forth in Fig. 1A.

After the paving compositions are formed, samples of each are also evaluated to determine Cohesion at 77°F, kg-cm, Traffic Time 1 hour according to ISSA TB-139; Test Method to Determine Set and Cure Development of Slurry Surfacing Systems by Cohesion Tester. The results are set forth in Fig. 1A.

### Granite Aggregate:

Comparative Composition 1 and the Compositions 1 and 2 are each independently mixed for form asphalt emulsions. The asphalt emulsions are then combined with a granite aggregate to form paving compositions (i.e., mix designs). The amount of the asphalt emulsion added to the granite aggregate is 12g for every 100g of aggregate. In addition, 6g of water and 1g of cement is also added for every 100g of aggregate. The cement is Portland cement which is known in the art to mainly include four main compounds: tricalcium silicate (3CaO · SiO₂), dicalcium silicate (2CaO · SiO₂), tricalcium aluminate (3CaO · Al₂O₃), and a tetra-calcium aluminoferrite (4CaO · Al₂O₃Fe₂O₃).

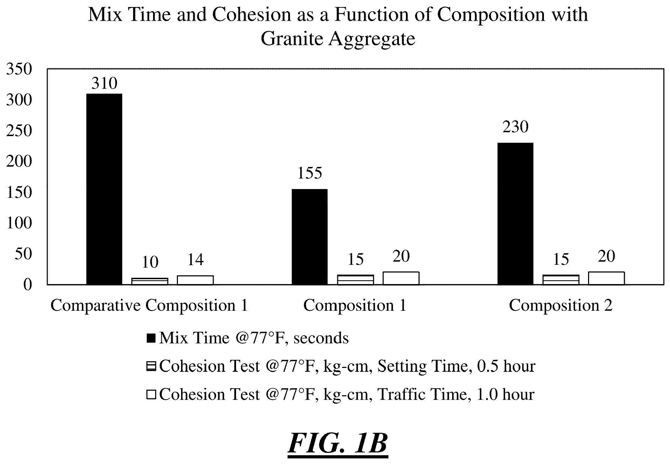

After the paving compositions are formed, samples of each are evaluated to determine Mix Time in seconds at 77°F according to ISSA: TB-113; Test Method for Determining Mix Time for Slurry Surfacing Systems. The results are set forth in Fig. 1B.

After the paving compositions are formed, samples of each are also evaluated to determine Cohesion kg-cm, at 77°F, Setting Time 0.5 hour according to ISSA TB-139; Test Method to Determine Set and Cure Development of Slurry Surfacing Systems by Cohesion Tester. The results are set forth in Fig. 1B.

After the paving compositions are formed, samples of each are also evaluated to determine Cohesion kg-cm, at 77°F, Traffic Time 1 hour according to ISSA TB-139; Test Method to Determine Set and Cure Development of Slurry Surfacing Systems by Cohesion Tester. The results are set forth in Fig. 1B.

The results set forth in Figures 1A and 1B show that Compositions 1 and 2 outperform the Comparative Composition relative to shorter mix time and they also show equal or better cohesion than the Comparative Composition at 30 and 60 min. As the skilled person recognizes, mix time varies often with weather, temperature, wind, asphalt, aggregates, etc. It can be adjustable.

The data set forth above and in the Figures are superior and unexpected over what is known in the art. Granite aggregate contains complex silicates of divalent or trivalent ions (SiO₂) with a -2 or -3 charge which possess high affinity to cationic bitumen emulsions. It would be expected to have a satisfactory cohesion with asphalt emulsion based on standard latex polymer dispersion. In addition, limestone aggregate possesses less affinity to cationic bitumen emulsions than granite aggregates, but it would be unexpected to maintain a satisfactory cohesion. However, it is not expected to produce superior results as it would otherwise be believed that a cationic latex is more compatible with a cationic asphalt emulsion.

When granite aggregates are used, cohesion results at 30 min and 60 min for the inventive asphalt emulsion is 15 kg-cm and 20 kg-cm as compared to 10 kg-cm and 14 kg-cm for standard (comparative) asphalt emulsions, respectively. Without intending to be bound by theory, it is believed that cohesion results were enhanced for granite aggregates which is more alkaline due to the additives used in the inventive emulsions. The additive of this disclosure includes alkylamine alkoxylates and alkoxylated alcohols which improve adhesion to the surface of granite due to its slightly positively charged produced by protonation during the water phase preparation. This additive chemistry used in asphalt emulsions is unexpectedly flexible and improves adhesion in both alkaline and acidic environments of aggregate surfaces.

### Additional Limestone Evaluations

Comparative Composition 1 and the Compositions 1 and 2 are again each independently mixed for form asphalt emulsions. The asphalt emulsions are then combined with a limestone aggregate to form paving compositions (i.e., mix designs) as per the same method described above.

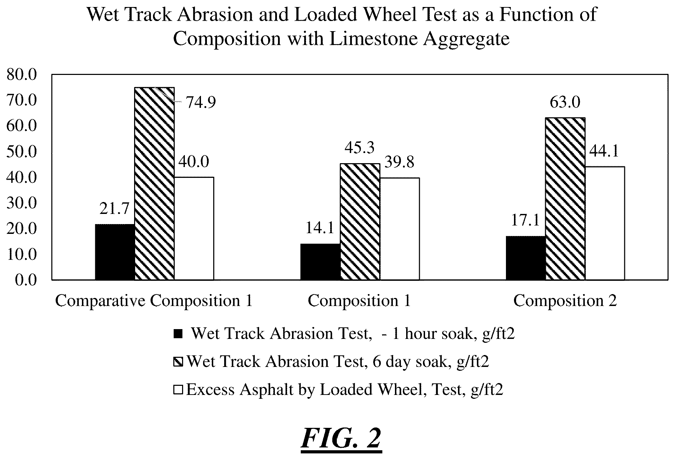

After the paving compositions are formed, samples of each are evaluated to determine Wet Track Abrasion; 1 hour soak, g/ft² according to ISSA TB-100; Laboratory Test Method for Wet Track Abrasion of Slurry Surfacing Systems. The results are set forth in Fig. 2.

After the paving compositions are formed, samples of each are also evaluated to determine Wet Track Abrasion; 6 day soak, g/ft² according to ISSA TB-100; Laboratory Test Method for Wet Track Abrasion of Slurry Surfacing Systems. The results are set forth in Fig. 2.

After the paving compositions are formed, samples of each are also evaluated to determine Excess Asphalt by Loaded Wheel Test, g/ft² according to ISSA TB-109; Test Method for Measurement of Excess Asphalt In Bituminous Mixtures by Use of a Loaded Wheel Tester and Sand Adhesion. The results are set forth in Fig. 2.

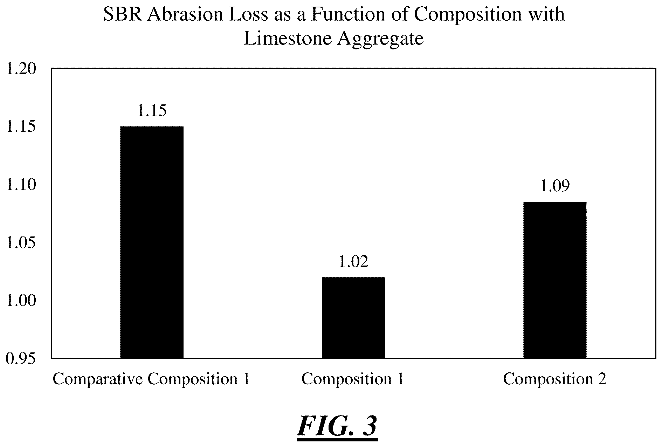

After the paving compositions are formed, samples of each are also evaluated to determine SBR Abrasion Loss, gm, according to ISSA TB-144; Test Method for Classification of Slurry Surfacing Materials Compatibility by Schulze-Breuer and Ruck Procedures. The results are set forth in Fig. 3.

The results set forth in Figures 2 and 3 show that Composition 1 and Comparative Composition 1 exhibit similar Wet Track Abrasion 1 hr test results and similar Excess Asphalt by Loaded Wheel test results.

The data set forth above and in the Figures are superior and unexpected over what is known in the art. Limestone aggregates are primarily composed of calcium carbonate in the form of the minerals calcite and aragonite. Calcium carbonate, the main component, is a neutral compound. However, calcium ions (Ca²⁺) can be released during chemical reactions. This makes limestone less compatible with cationic asphalt emulsions. It is unexpected for the inventive asphalt emulsion to have better results of SBR abrasion loss which means enhanced compatibility of fines with additives present in the asphalt emulsion. It is also unexpected to have better results of Wet Track Abrasion test which evaluate the abrasion of the asphalt mixture in wet conditions indicating adhesion. Moreover, it was not expected to achieve better rutting results of Loaded Wheel tester.

Without intending to be bound by theory, it is believed that the superior results are achieved due to the alkylamine alkoxylate and alkoxylated alcohol of the additive that can interact more effectively with both the asphalt and the stone surfaces. For cationic surfaces, the additive can exhibit electrostatic interactions wherein a polar alkoxy group can interact with a positively charged site on a cationic surface through electrostatic attraction. For anionic surfaces, the polar groups can still engage with the negatively charged sites through hydrogen bonding or electrostatic attraction, ensuring effective interaction despite the charge difference. The additive improves bonding between the aggregate and asphalt which improves cohesion, adhesion, compatibility of the components and susceptibility to long-term moisture damage.

While at least one exemplary embodiment has been presented in the foregoing detailed description, it should be appreciated that a vast number of variations exist. It should also be appreciated that the exemplary embodiment or exemplary embodiments are only examples, and are not intended to limit the scope, applicability, or configuration in any way. Rather, the foregoing detailed description will provide those skilled in the art with a convenient road map for implementing an exemplary embodiment. It being understood that various changes may be made in the function and arrangement of elements described in an exemplary embodiment without departing from the scope as set forth in the appended claims.

## Claims

1. An asphalt emulsion comprising:
A. a water phase present in an amount of from about 30 to about 50 weight percent based on a total weight of the asphalt emulsion and comprising:
(1) a latex polymer comprising styrene butadiene; and
(2) an emulsifier comprising;
(a) an alkyl diamine present in an amount of from about 0.2 to about 2.5 weight percent actives based on a total weight of the emulsifier; and
(b) a fatty acid amine condensate that is the reaction product of a C16-C20 fatty acid and a polyamine and that is present in an amount of from about 0.2 to about 2.5 weight percent actives based on a total weight of the emulsifier; and
(3) an additive present in an amount of from about 0.05 to about 0.5 weight percent actives based on a total weight of the asphalt emulsion and comprising;
(a) a C10-C20 alcohol that is alkoxylated with from about 15 to about 75 moles of ethylene oxide and from about 0 to about 60 moles of propylene oxide and is present in an amount of from about 10 to about 90 weight percent actives based on a total weight of the additive; and
(b) a C8-C24 alkylamine that is alkoxylated with from about 5 to about 25 moles of ethylene oxide and from about 0 to about 25 moles of propylene oxide and is present in an amount of from about 10 to about 90 weight percent actives based on a total weight of the additive;
B. an oil phase present in an amount of from about 50 to about 70 weight percent based on a total weight of the asphalt emulsion and comprising asphalt.

2. An asphalt emulsion as claimed in claim 1, wherein the alkyl diamine is N,N,N'-Trimethyl-N'-tallow alkyltrimethylenediamine.

3. An asphalt emulsion as claimed in claim 1 or claim 2, wherein the C16-C20 fatty acid is tall oil fatty acid.

4. An asphalt emulsion as claimed in any preceding claim, wherein the polyamine that is reacted with the C16-C20 fatty acid is a polyamine chosen from ethylene diamine (EDA), diethylenetriamine (DETA), triethylenetetramine (TETA), and combinations thereof.

5. An asphalt emulsion as claimed in any preceding claim, wherein the C10-C20 alcohol is further defined as tridecyl alcohol.

6. An asphalt emulsion as claimed in any preceding claim, wherein the C10-C20 alcohol is ethoxylated with about 40 to about 60 moles of ethylene oxide and/or the C10-C20 alcohol is present in an amount of about 50 weight percent based on a total weight of the additive.

7. An asphalt emulsion as claimed in any preceding claim, wherein the C8-C24 alkylamine is further defined as cocoamine.

8. An asphalt emulsion as claimed in any preceding claim, wherein the C8-C24 alkylamine is ethoxylated with about 10 to about 20 moles of ethylene oxide and/or the C8-C24 alkylamine is present in an amount of from about 50 weight percent based on a total weight of the additive.

9. An asphalt emulsion as claimed in any preceding claim, wherein the fatty acid amine condensate is present in an amount of from about 0.5 to about 1.5 weight percent actives based on a total weight of the asphalt emulsion.

10. An asphalt emulsion as claimed in any preceding claim, wherein the additive is present in an amount of from about 0.1 to about 0.2 weight percent actives based on a total weight of the asphalt emulsion.

11. An asphalt emulsion as claimed in any preceding claim that is anionic.

12. An asphalt emulsion as claimed in any preceding claim that is cationic.

13. A paving material comprising:
a. an asphalt emulsion as claimed in any preceding claim; and
b. an aggregate.

14. A paving material as claimed in claim 13, wherein the aggregate comprises limestone, granite, or combinations thereof.

15. A paving material as claimed in claim 13 or claim 14 exhibiting at least one of:
(i) a mix time of from about 120 to about 450 seconds measured at 77°F according to ISSA: TB-113;
(ii) cohesion of from about 12 to about 35 kg-cm measured at 77°F, Setting Time 0.5 hour according to ISSA TB-139;
(iii) cohesion of from about 20 to about 35 kg-cm, measured at 77°F, Traffic Time 1 hour according to ISSA TB-139;
(iv) a Wet Track Abrasion of 45 to about 55 g/ft² measured at 1 hour soak, according to ISSA TB-100;
(v) a Wet Track Abrasion of about 70 to about 80 g/ft² measured at 6 day soak, according to ISSA TB-100;
(vi) an Excess Asphalt by Loaded Wheel Test of 45 to about 50 measured according to ISSA TB-109; and
(vii) an SBR Abrasion Loss of about 0 to about 1 measured according to ISSA TB-144.
